# EUROPEAN PATENT SPECIFICATION

(11) **EP 3 780 961 B1**
(45) Date of publication and mention of the grant of the patent: **28.01.2026**
(21) Application number: 19719929.2
(22) Date of filing: 25.02.2019
(51) Int. Cl.: A22B 7/00, A22C 21/00, B65G 47/86

(54) **PROCESSING APPARATUS FOR POULTRY COMPRISING ONE OR MORE TRANSFER UNITS**
VERARBEITUNGSVORRICHTUNG FÜR GEFLÜGEL MIT EINER ODER MEHREREN ÜBERTRAGUNGSEINHEITEN
APPAREIL DE TRAITEMENT POUR VOLAILLE COMPRENANT UNE OU PLUSIEURS UNITÉS DE TRANSFERT

(30) Priority: 16.04.2018 NL 2020775
(43) Date of publication of application: 24.02.2021
(73) Proprietor: Meyn Food Processing Technology B.V., 1511 MA Oostzaan (NL)
(72) Inventor: VAN HILLO, Eric Adriaan, 1511 MA Oostzaan (NL); VAN STEIJN, Aloysius Christianus Maria, 1511 MA Oostzaan (NL); HAGENDOORN, Jan Willem, 1511 MA Oostzaan (NL)
(74) Representative: van Breda, Jacobus
(86) International application number: PCT/NL2019/050121
(87) International publication number: WO 2019/203638

(56) References cited:
- EP-A1- 2 687 101
- M Z BAHAROM ET AL: "EDDY CURRENT BRAKING STUDY FOR BRAKE DISC OF ALUMINIUM, COPPER AND ZINK", REGIONAL ENGINEERING POSTGRADUATE CONFERENCE, 2011, XP055532096, Retrieved from the Internet <URL:http://umpir.ump.edu.my/id/eprint/3064/1/EPC2011_zairi_edited_after_1st_reviewed.pdf> [retrieved on 20181210]
- DER-MING MA ET AL: "THE DESIGN OF EDDY-CURRENT MAGNET BRAKES", TRANSACTIONS OF THE CANADIAN SOCIETY FOR MECHANICAL ENGINEERING, vol. 35, no. 1, 1 March 2011 (2011-03-01), CA, pages 19 - 37, XP055532104, ISSN: 0315-8977, DOI: 10.1139/tcsme-2011-0002

## Description

The invention relates to a processing apparatus for poultry comprising one or more transfer units placed intermediate and conveying poultry from a first line to a subsequent second line, wherein both the first line and the second line are selected from the group comprising a slaughtering line, an evisceration line, a chilling line, a sorting line, a cutup line, and/or another type of line or lines, wherein each transfer unit is embodied with a circulating support onto which a plurality of transfer means are mounted that in a not obstructed situation do not carry out a relative movement with respect to the support, yet in an obstructed situation are able to move relative to the support, and that the circulating support is arranged to convey the transfer means between a supply station at the side of the first line and a discharge station at the side of the second line and vice versa.

Such a processing apparatus is known from EP-B-0 736 255 and from EP-B-0 782 823, both in the name of the applicant.

EP-B-1 848 282 discloses another, more complex type of processing apparatus intended for the same functionality as the processing apparatus according to the preamble, in which a drive is applied for jointly driving a plurality of transfer means, and coupling means associated with each transfer means for coupling to the drive.

The transfer units forming part of the processing apparatus according to the preamble are operative in a relatively polluted environment, due to the grease and blood escaping from the poultry that is being processed. This grease and blood may even mingle with water that is applied in or around the processing apparatus, and the grease and blood may partly solidify. All in all the conditions prevailing in the processing apparatus of the preamble are unpredictable and result at times in poor reliability in the transfer of the poultry from a first line to a subsequent second line selected from the group comprising a slaughtering line, an evisceration line, a chilling line, a sorting line and a cutup line. This will even get worse and possibly unacceptable with increasing speed of processing. Current processing speeds are at a level of handling 8000 chickens per hour, but industry is aiming to processing speeds of at least 12,000 chickens per hour and possibly 15,000 chickens per hour. Certainly at these increased processing speeds, the prior art processing apparatus is unsuitable.

According to the invention, this problem is addressed to a great extent, if not entirely, by the processing line and the transfer means in accordance with one or more of the appended claims.

It is remarked that EP-B-2 687 101 has already proposed a processing line wherein the circulating support comprises material that is magnetically conductive and that the transfer means are provided with at least one magnet so as to induce eddy currents in the circulating support to counteract relative motion between the transfer means and the circulating support.

A problem of EP-B-2 687 101 appears to be however that the material properties of the "magnetically conductive" material are undetermined or unclear and the skilled person does therefore not derive an enabling disclosure from EP-B-2 687 101. Accordingly, the skilled person is unable to carry out the invention of EP-B-2 687 101 since he is unable to determine the material properties of the magnetically conductive material intended to form the circulating plate (Decision EPO February 12, 2018).

It is an object of the invention to provide a solution that enables the skilled person to avoid the pitfalls of the prior art.

According to the invention, first and foremost the circulating support comprises material or a layer of material with a magnetic permeability that is at least the magnetic permeability of vacuum, and that the circulating support further comprises ferritic stainless steel or a layer of ferritic stainless steel. Surprisingly this provides a workable solution that the skilled person can implement without undue burden.

The beauty of this solution is that grease, blood and water have no impact on the operability of the eddy currents that counteract any such relative motion between the circulating support and the transfer means. The reliability of the accurate and timely transfer of poultry by the transfer units between the first line and the second line is therefore tremendously improved. The braking means provided in accordance with the invention are moreover maintenance-free, since there is no physical contact between the circulating plate and the magnet of the transfer means that could cause wear and tear. Another advantage is that particularly with increasing speed of processing of poultry and accordingly higher rotational speeds of the circulating plate, the braking forces induced by the eddy currents are correspondingly increased.

Suitably the circulating support further comprises aluminium or a layer of aluminium.

It is remarked that the article "Eddy current braking study for brake disc of aluminium, copper and zink", by M.Z. Baharom et al, Regional Engineering Postgraduates Conference 2011, XP 055532096, and the article "The design of eddy current magnet brakes", by Der-Ming Ma et al, transactions of the Canadian Society for mechanical engineering, volume 35, no. 1, 1 March 2011, pages 19 - 37, XP 055532104 discuss respectively the choice of suitable materials in eddy current disc brakes, and in general the design of eddy current magnet brakes.

The aluminium layer has a magnetic permeability that is comparable or a little higher than the magnetic permeability of vacuum, but is sensitive to the inducement of eddy currents that counteract relative motion between the circulating support and the transfer means, which is in particular operational with relatively high differential speeds between the transfer means and the circulating support. On the other hand the steel layer also counteracts relative motion between the circulating support and the transfer means, but at a relatively low differential speed between the transfer means and the circulating support. This latter braking function is caused by the magnetic attraction between the at least one magnet and the said steel layer. This braking function is less effective with higher differential speeds between the transfer means and the circulating support. The combination of the eddy current braking with the aluminium layer, and the magnetic braking with the said steel layer which has a comparably high relative permeability provides an optimum result in all practical situations at both lower and higher differential speeds between the transfer means and the circulating support.

Suitably the ferritic stainless steel is of industrial steel grade 1.4016 (EN) or 430 (ASTM).

It is found advantageous that between the at least one magnet and the circulating support an air gap is provided smaller than 30 mm, preferably in the range 0,2 - 2 mm, and more preferably in the range 0,5 - 1,2 mm. This enables that the magnets that are applied can be of average strength. In fact it suffices when the at least one magnet is arranged to provide a magnetic flux density at the surface of the circulating support of at least 0,5 T. It is preferred that the magnetic flux density at the surface of the circulating support is at least 0,2 T, preferably at least 0,5 T, and more preferably in the range 0,7 - 1,1 T.

. Suitably the magnet is a permanent magnet or switchable magnet. The application of a switchable magnet is particularly preferable in the embodiment in which the transfer unit is provided with a receiving station which is drivable in synchronization with the supply station, which transfer unit is further provided with a delivery station which is drivable in synchronization with the discharge station. The transfer unit as applied in this embodiment is also known as buffer unit. In this buffer unit the transfer means are collected in front of a stop that can be actuated for synchronized release of the transfer means to the receiving station and delivery station respectively. The stop then forms the obstruction causing a relative motion of the circulating plate with respect to the obstructed transfer means. With a permanent magnet provided in the transfer means this will result in a continuous inducing of eddy currents in the circulating plate, which can be avoided when the magnets can be switched off.

Preferably the transfer means are provided with at least two magnets for cooperation with the circulating support, which magnets are provided on opposite sides of an imaginary axis of symmetry of the transfer means. This provides in all practical circumstances effective balancing of the transfer means on the circulating support, also when poultry is suspended from the transfer means.

In another aspect of the invention, neighbouring transfer means that are mounted on the circulating support are provided with permanent magnets of the same polarity at sides of these neighbouring transfer means that are facing each other. These permanent magnets are effective in limiting the severity of a collision when a trailing transfer means approaches an earlier transfer means that is already obstructed in its further movement by the circulating plate.

Corresponding to the above the invention is also embodied in separate transfer means for mounting on a circulating support of a processing apparatus as discussed hereinabove, wherein the transfer means is provided with at least one magnet.

A preferable embodiment of the transfer means of the invention has the feature that opposite sides of the transfer means that during use are perpendicular to their conveying direction are provided with a magnet. This serves the above mentioned purpose to limit the severity of a collision of a trailing transfer means that approaches an earlier obstructed transfer means.

The invention will hereinafter be further elucidated with reference to the drawing of a non-limiting embodiment of a processing apparatus in accordance with the invention.

In the drawing:
- figure 1 schematically shows the processing apparatus of the invention;
- figure 2 shows a single transfer unit, several of which may be employed in the processing apparatus of the invention;
- figure 3 shows single transfer means for use in the transfer unit shown in figure 2; and
- figure 4 shows an exploded view of the rim of the circulating support used in the processing apparatus of the invention.

Whenever in the figures the same reference numerals are applied, these numerals refer to the same parts.

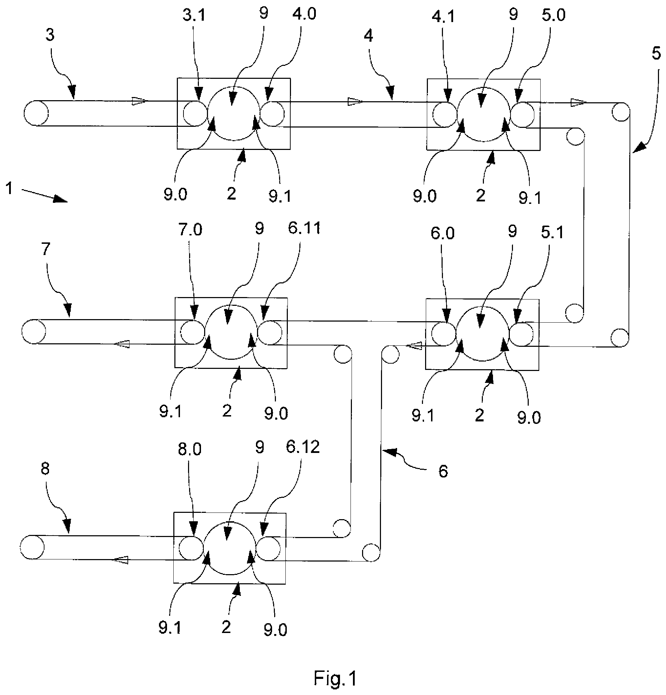

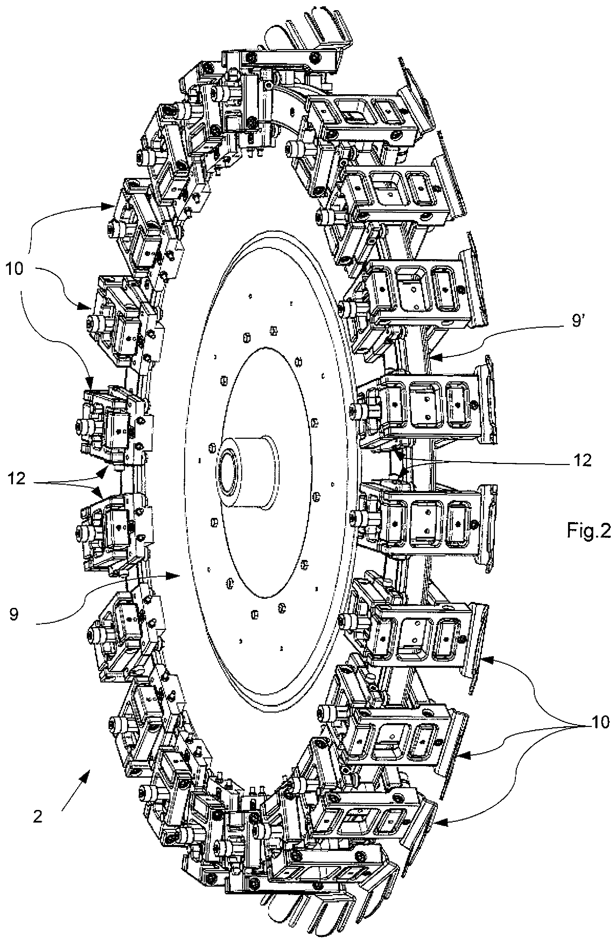

Referring first to figure 1 a typical processing apparatus 1 for poultry is shown comprising one or more transfer units 2 placed intermediate processing lines. The transfer units 2 convey poultry from a first line to a subsequent second line, wherein both the first line and the second line are appropriately selected from the group comprising a slaughtering line 3, an evisceration line 4, a chilling line 5, a sorting line 6 and a cutup line 7, 8. Other types of lines are feasible as well. Each transfer unit 2 is embodied with a circulating support 9 and as shown in figure 2, on the circulating support 9 a plurality of transfer means 10 are mounted.

In accordance to what is known from the prior art EP-B-0 736 255 and from EP-B-0 782 823 and which requires therefore no further elucidation, in a not obstructed situation the transfer means 10 do not carry out a relative movement with respect to the support 9, yet in an obstructed situation the transfer means 10 are able to move relative to the support 9. Further, in accordance with the prior art and shown in figure 1, the circulating support 9 is arranged to convey the said transfer means 10 that are shown in figure 2 between a supply station 3.1; 4.1; 5.1; 6.11, 6.12 at the side of a first line and a discharge station 4.0; 5.0; 6.0; 7.0; 8.0 at the side of a second line and vice versa. Correspondingly the transfer unit 9 is provided with a receiving station 9.0 which is drivable in synchronization with an adjacent supply station 3.1; 4.1; 5.1; 6.11, 6.12, and with a delivery station 9.1 which is drivable in synchronization with an adjacent discharge station 4.0; 5.0; 6.0; 7.0; 8.0. This is all clearly disclosed in EP-B-0 736 255 and EP-B-0 782 823 and requires therefore no further elucidation with reference to the drawing.

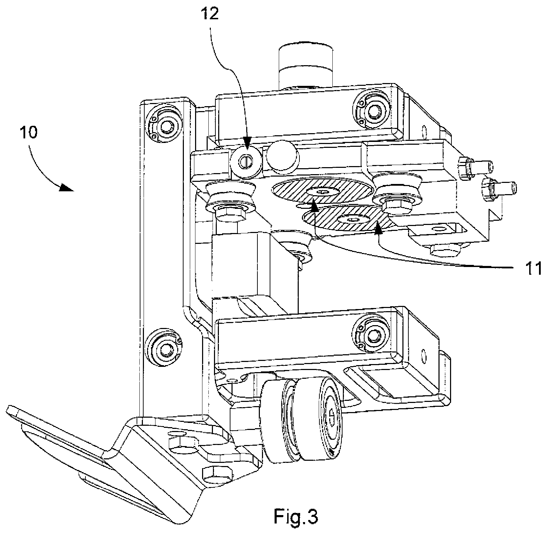

In accordance with the invention the circulating support 9 shown in figure 1 and 2 comprises at least at its rim 9' (that is where the transfer means 10 are located) material that is magnetically permeable and that each of the transfer means 10 (see figure 3) is provided with at least one magnet 11 so as to induce eddy currents in the (rim 9' of the) circulating support 9 that counteracts relative motion between the transfer means 10 and the circulating support 9. The said magnet is a permanent magnet or a switchable magnet.

In figure 3 is shown that the transfer means 10 are provided with two magnets 11 for cooperation with the circulating support 9, which magnets 11 are provided on opposite sides of an imaginary axis of symmetry of the transfer means 10. The magnet or magnets 11 are arranged to provide a magnetic flux density at the surface of the circulating support 9 of at least 0,5 T. A preferred range of the flux density at the surface of the circulating support 9 is at least 0,2 T, preferably at least 0,5 T, and more preferably in the range 0,7 - 1,1 T. Between the at least one magnet 11 and the circulating support 9 an air gap is provided smaller than 30 mm, preferably in the range 0,2 - 2 mm, and more preferably in the range 0,5 - 1,2 mm.

Figure 2 shows that neighbouring transfer means 10 that are mounted on the circulating support 9 are provided with permanent magnets 12 of the same polarity at facing sides of these neighbouring transfer means 10. Likewise figure 3 shows that a side of the transfer means 10 that during use is perpendicular to its conveying direction is provided with a magnet 12 that is intended to cooperate with similar magnets of same polarity provided on an oppositely facing side of neighbouring transfer means.

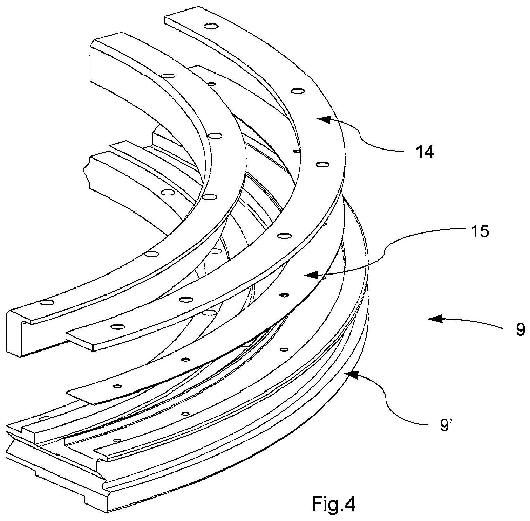

In figure 4 the rim 9' of the circulating support 9 is shown in an exploded view, which reveals that the circulating support 9 comprises at least at its rim 9' material or -in the shown embodiment- a layer 14 of material with a magnetic permeability that is at least the magnetic permeability of vacuum. Preferably this material or layer 14 of material is aluminium. Figure 4 further shows that the circulating support 9 preferably also comprises at least a layer 15 of (ferritic) stainless steel, for instance as shown on a side of the circulating support 9 that faces away from the at least one magnet 11; i.e. that is backing the layer 14 of aluminium. Preferred is the use of steel grade 1.4016 (EN) or 430 (ASTM). The position of the layer 14 of aluminium and the layer 15 of ferritic stainless steel can also be interchanged.

The applicant wishes to point out that the foregoing description with reference to the drawing is merely intended to elucidate the appended claims without limiting these claims to the discussed embodiment. The scope of protection that merits the invention is exclusively determined by the appended claims, wherein any possible ambiguity can be resolved with reference to the discussed embodiment.

## Claims

1. Processing apparatus (1) for poultry comprising one or more transfer units (2) placed intermediate and conveying poultry from a first line to a subsequent second line, wherein both the first line and the second line are selected from the group comprising a slaughtering line (3), an evisceration line (4), a chilling line (5), a sorting line (6), a cutup line (7, 8) and/or another type of line or lines, wherein each transfer unit (2) is embodied with a circulating support (9) onto which a plurality of transfer means (10) are mounted that in a not obstructed situation do not carry out a relative movement with respect to the support (9), yet in an obstructed situation are able to move relative to the support (9), and that the circulating support (9) is arranged to convey the transfer means (10) between a supply station (3.1; 4.1; 5.1; 6.11, 6.12) at the side of the first line and a discharge station (4.0; 5.0; 6.0; 7.0; 8.0) at the side of the second line and vice versa, the transfer means (10) are provided with at least one magnet (11) so as to induce eddy currents in the circulating support (9) that counteracts relative motion between the transfer means (10) and the circulating support (9), **characterized in that** the circulating support (9) comprises material or a layer (14) of material with a magnetic permeability that is at least the magnetic permeability of vacuum, and that the circulating support further comprises ferritic stainless steel or a layer (15) of ferritic stainless steel.

2. Processing apparatus according to claim 1, **characterized in that** the circulating support (9) comprises aluminium or a layer (14) of aluminium.

3. Processing apparatus according to claim 1 or 2, **characterized in that** the ferritic stainless steel is of industrial steel grade 1.4016 (EN) or 430 (ASTM).

4. Processing apparatus according to any one of claims 1 - 3, **characterized in that** between the at least one magnet (11) and the circulating support (9) an air gap is provided smaller than 30 mm, preferably in the range 0,2 - 2 mm, and more preferably in the range 0,5 - 1,2 mm.

5. Processing apparatus according to any one of claims 1 - 4, **characterized in that** the at least one magnet (11) is arranged to provide a magnetic flux density at the surface of the circulating support (9) of at least 0,2 T, preferably at least 0,5 T, and more preferably in the range 0,7 - 1,1 T.

6. Processing apparatus according to any one of claims 1 - 5, **characterized in that** the magnet (11) is a permanent magnet or a switchable magnet.

7. Processing apparatus according to any one of claims 1 - 6, **characterized in that** the transfer unit (2) is provided with a receiving station (9.0) which is drivable in synchronization with the supply station (3.1; 4.1; 5.1; 6.11, 6.12), and that the transfer unit is provided with a delivery station (9.1) which is drivable in synchronization with the discharge station (4.0; 5.0; 6.0; 7.0; 8.0).

8. Processing apparatus according to any one of the previous claims 1 - 7, **characterized in that** the transfer means (10) are provided with at least two magnets (11) for cooperation with the circulating support (9), which magnets are provided on opposite sides of an imaginary axis of symmetry of the transfer means.

9. Processing apparatus according to any one of the previous claims 1 - 8, **characterized in that** neighbouring transfer means (10) that are mounted on the circulating support (9) are provided with permanent magnets (12) of the same polarity at facing sides of these neighbouring transfer means.

## Patentansprüche

1. Verarbeitungsvorrichtung (1) für Geflügel, umfassend eine oder mehrere Übertragungseinheiten (2), die zwischen Geflügel positioniert sind und dieses von einer ersten Linie zu einer darauffolgenden zweiten Linie befördern, wobei beide, sowohl die erste Linie als auch die zweite Linie aus der Gruppe ausgewählt sind umfassend eine Schlachtlinie (3), eine Ausweidungslinie (4), eine Kühlungslinie (5), eine Sortierlinie (6), eine Aufschneidelinie (7, 8) und/oder einen anderen Typ Linie oder Linien, wobei jede Übertragungseinheit (2) mit einer Zirkulierstütze (9) ausgestattet ist, auf die eine Mehrzahl von Übertragungsmitteln (10) montiert sind, die in einer nichtgehemmten Situation keine relative Bewegung in Bezug auf die Stütze (9) ausführen, jedoch in einer gehemmten Situation in der Lage sind, sich in Bezug auf die Stütze (9) zu bewegen und dass die Zirkulierstütze (9) eingerichtet ist, die Übertragungsmittel (10) zwischen einer Versorgungsstation (3.1; 4.1; 5.1; 6.11, 6.12) an der Seite der ersten Linie und einer Endladestation (4.0; 5.0; 6.0; 7.0; 8.0) an der Seite der zweiten Linie und umgekehrt zu befördern, die Übertragungsmittel (10) sind mit zumindest einem Magnet (11) derart ausgestattet, dass Wirbelströme in der Zirkulierstütze (9) induziert werden, die relativer Bewegung zwischen den Übertragungsmitteln (10) und der Zirkulierstütze (9) entgegenwirken, **dadurch gekennzeichnet, dass** die Zirkulierstütze (9) Material oder eine Schicht (14) aus Material mit einer magnetischen Permeabilität umfasst, die mindestens die magnetische Permeabilität von Vakuum ist, und dass die Zirkulierstütze ferner ferritischen Edelstahl oder eine Schicht (15) aus ferritischem Edelstahl umfasst.

2. Verarbeitungsvorrichtung nach Anspruch 1, **dadurch gekennzeichnet, dass** die Zirkulierstütze (9) Aluminium oder eine Schicht (14) aus Aluminium umfasst.

3. Verarbeitungsvorrichtung nach Anspruch 1 oder 2, **dadurch gekennzeichnet, dass** der ferritische Edelstahl die Industriestahlqualität 1.4016 (EN) oder 430 (ASTM) aufweist.

4. Verarbeitungsvorrichtung nach einem der Ansprüche 1 - 3, **dadurch gekennzeichnet, dass** zwischen dem zumindest einen Magnet (11) und der Zirkulierstütze (9) ein Luftspalt vorhanden ist, der kleiner als 30 mm ist, bevorzugt im Bereich von 0,2 - 2 mm und noch bevorzugter im Bereich von 0,5 - 1,2 mm liegt.

5. Verarbeitungsvorrichtung nach einem der Ansprüche 1 - 4, **dadurch gekennzeichnet, dass** der zumindest eine Magnet (11) eingerichtet ist, eine magnetische Flussdichte an der Oberfläche der Zirkulierstütze (9) von mindestens 0,2 T, bevorzugt mindestens 0,5 T und sehr bevorzugt im Bereich von 0,7 - 1,1 T bereitzustellen.

6. Verarbeitungsvorrichtung nach einem der Ansprüche 1 - 5, **dadurch gekennzeichnet, dass** der Magnet (11) ein Permanentmagnet oder ein umschaltbarer Magnet ist.

7. Verarbeitungsvorrichtung nach einem der Ansprüche 1 - 6, **dadurch gekennzeichnet, dass** die Übertragungseinheit (2) mit einer Empfangsstation (9.0) ausgestattet ist, die in Synchronisierung mit der Versorgungsstation (3.1; 4.1; 5.1; 6.11, 6.12) antreibbar ist, und dass die Übertragungseinheit mit einer Lieferstation (9.1) ausgestattet ist, die in Synchronisierung mit der Entladestation (4.0; 5.0; 6.0; 7.0; 8.0) antreibbar ist.

8. Verarbeitungsvorrichtung nach einem der vorhergehenden Ansprüche 1 - 7, **dadurch gekennzeichnet, dass** die Übertragungsmittel (10) mit zumindest zwei Magneten (11) zur Zusammenarbeit mit der Zirkulierstütze (9) ausgestattet sind, welche Magnete auf entgegengesetzten Seiten einer imaginären Symmetrieachse der Übertragungsmittel angeordnet sind.

9. Verarbeitungsvorrichtung nach einem der vorhergehenden Ansprüche 1 - 8, **dadurch gekennzeichnet, dass** benachbarte Übertragungsmittel (10), die auf der Zirkulierstütze (9) montiert sind, mit Permanentmagneten (12) derselben Polarität an gegenüberliegenden Seiten dieser benachbarten Übertragungsmittel ausgestattet sind.

## Revendications

1. Appareil de traitement (1) pour volaille comprenant une ou plusieurs unités de transfert (2) placées de manière intermédiaire et transportant la volaille d'une première ligne vers une seconde ligne subséquente, dans lequel la première ligne et la seconde ligne sont toutes deux choisies dans le groupe comprenant une ligne d'abattage (3), une ligne d'éviscération (4), une ligne de refroidissement (5), une ligne de tri (6), une ligne de découpe (7, 8) et/ou un autre type de ligne ou de lignes, dans lequel chaque unité de transfert (2) est réalisée avec un support circulant (9) sur lequel une pluralité de moyens de transfert (10) sont montés, lesquels, dans une situation non obstruée, n'effectuent pas de mouvement relatif par rapport au support (9), mais, dans une situation obstruée, sont capables de se déplacer relativement au support (9), et dans lequel le support circulant (9) est agencé pour transporter les moyens de transfert (10) entre une station d'alimentation (3.1; 4.1; 5.1; 6.11, 6.12) du côté de la première ligne et une station de décharge (4.0; 5.0; 6.0; 7.0; 8.0) du côté de la seconde ligne, et inversement, les moyens de transfert (10) étant pourvus d'au moins un aimant (11) de manière à induire des courants de Foucault dans le support circulant (9) qui s'opposent au mouvement relatif entre les moyens de transfert (10) et le support circulant (9), **caractérisé en ce que** le support circulant (9) comprend un matériau ou une couche (14) de matériau ayant une perméabilité magnétique au moins égale à la perméabilité magnétique du vide, et **en ce que** le support circulant comprend en outre de l'acier inoxydable ferritique ou une couche (15) d'acier inoxydable ferritique.

2. Appareil de traitement selon la revendication 1, **caractérisé en ce que** le support circulant (9) comprend de l'aluminium ou une couche (14) d'aluminium.

3. Appareil de traitement selon la revendication 1 ou 2, **caractérisé en ce que** l'acier inoxydable ferritique est de nuance industrielle 1.4016 (EN) ou 430 (ASTM).

4. Appareil de traitement selon l'une quelconque des revendications 1 à 3, **caractérisé en ce qu'**entre le ou les aimants (11) et le support circulant (9), un entrefer inférieur à 30 mm est prévu, de préférence compris dans la plage de 0,2 - 2 mm, et plus préférentiellement dans la plage de 0,5 - 1,2 mm.

5. Appareil de traitement selon l'une quelconque des revendications 1 à 4, **caractérisé en ce que** le ou les aimants (11) sont agencés de manière à fournir une densité de flux magnétique à la surface du support circulant (9) d'au moins 0,2 T, de préférence d'au moins 0,5 T, et plus préférentiellement comprise dans la plage de 0,7 - 1,1 T.

6. Appareil de traitement selon l'une quelconque des revendications 1 à 5, **caractérisé en ce que** l'aimant (11) est un aimant permanent ou un aimant commutable.

7. Appareil de traitement selon l'une quelconque des revendications 1 à 6, **caractérisé en ce que** l'unité de transfert (2) est pourvue d'une station de réception (9.0) pouvant être entraînée en synchronisation avec la station d'alimentation (3.1; 4.1; 5.1; 6.11, 6.12), et **en ce que** l'unité de transfert est pourvue d'une station de livraison (9.1) pouvant être entraînée en synchronisation avec la station de décharge (4.0; 5.0; 6.0; 7.0; 8.0).

8. Appareil de traitement selon l'une quelconque des revendications précédentes 1 à 7, **caractérisé en ce que** les moyens de transfert (10) sont pourvus d'au moins deux aimants (11) destinés à coopérer avec le support circulant (9), lesquels aimants sont disposés de part et d'autre d'un axe imaginaire de symétrie des moyens de transfert.

9. Appareil de traitement selon l'une quelconque des revendications précédentes 1 à 8, **caractérisé en ce que** des moyens de transfert voisins (10), montés sur le support circulant (9), sont pourvus d'aimants permanents (12) de même polarité sur les côtés opposés de ces moyens de transfert voisins.
